# EUROPEAN PATENT APPLICATION

(11) **EP 4 361 494 A1**
(43) Date of publication of application: **01.05.2024**
(21) Application number: 22828642.3
(22) Date of filing: 07.06.2022
(51) Int. Cl.: F17C 13/12, F17C 13/04, F16K 17/00

(54) **PRESSURE RELIEF DEVICE FOR HIGH-PRESSURE VESSEL**

(30) Priority: 23.06.2021 KR 20210081458
(71) Applicant: Youngdo Ind. Co., Ltd., Busan 46751 (KR)
(72) Inventor: KIM, Byung Jae, Busan 46751 (KR); NAM, Woo Cheol, Busan 46751 (KR)
(74) Representative: Lambacher, Michael
(86) International application number: PCT/KR2022/007992
(87) International publication number: WO 2022/270795

(57) **Abstract**

A pressure relief device for a high-pressure vessel includes: a first body part which is coupled to a valve body mounted on a high-pressure vessel, and which has a gas passage and a space part formed therein, the gas passage having a gas of the high-pressure vessel entering therein, and the space part communicating with the gas passage; a second body part which is mounted in the space part of the first body part, and has a gas outlet and a chamber formed therein, the gas outlet discharging, to the outside, the gas that has entered into the space part, and the chamber communicating with the space part; a piston member which is mounted in the chamber so as to be linearly moveable so as to open/close the gas passage; a spring arranged between the space part and the piston member so as to provide an elastic force in the backward-moving direction of the piston member; and a fusible alloy which is mounted in the chamber in a position at the rear of the piston member, and melts when the surrounding temperature reaches a predetermined temperature or higher, wherein, when the fusible alloy melts and is thus discharged to the outside of the chamber, the piston member moves backwards, thereby opening the gas passage, and thus the gas may be rapidly discharged, and reliability may be increased.

## Description

### TECHNICAL FIELD

The present invention relates to a pressure relief device for a high-pressure vessel, which is mounted in the high-pressure vessel in which high-pressure gas is stored, and is installed in a valve assembly for controlling the flow of gas, to thus discharge gas stored in the high-pressure vessel to the outside when the ambient temperature is increased by a fire or the like, thereby preventing explosion of the high-pressure vessel.

### BACKGROUND ART

Currently, in the case of a hydrogen fuel cell system, a valve is provided in a high-pressure vessel containing a gas to control the flow of the gas, when a gas is charged into the high-pressure vessel, and to control the flow of the gas, when the gas stored in the high-pressure vessel is supplied to a gas consumer.

Such a valve may precisely control the flow of a gas according to an electric signal, and should keep the pressure of the gas stored in a hydrogen vessel to be constant, and prevent explosion of a high-pressure vessel when a hydrogen fuel cell vehicle overturns or a fire breaks out therein.

Therefore, when the ambient temperature rises in the event of an outbreak of fire, the valve is equipped with a pressure relief device (PRD) that discharges, to the outside, the high-pressure gas stored in the high-pressure vessel.

As disclosed in Korean Patent No. 10-0964738 (June 10, 2010), a conventional pressure relief device includes a fusible alloy coupling unit installed in a valve coupling unit coupled to a valve of a gas vessel filled with a gas, wherein a fusible alloy is mounted on the fusible coupling unit to be sealed, a disc is inserted into the valve coupling unit to prevent the fusible alloy from being pushed by high-pressure, and when the surrounding environment temperature rises above a specific temperature and thus, the fusible alloy melts, the disc is ruptured by a pressure to discharge the gas stored in the gas vessel to the outside to thereby prevent explosion of the gas vessel.

However, since the conventional pressure relief device has a structure for sealing a gas discharge passage only by a disc and a fusible alloy, reliability is reduced, and a flow path is opened while the disc is ruptured. Since the broken disk fragment remains on the flow path, the flow path may be blocked, and thus there is a problem that rapid release is difficult due to a difference in gas discharge time in the pressure vessel.

### DISCLOSURE

### TECHNICAL PROBLEM

Therefore, an objective of the present invention is to provide a pressure relief device for a high-pressure vessel capable of quickly discharging a high-pressure gas of the high-pressure vessel since the high-pressure gas of the high-pressure vessel is discharged to the outside through a gas passage by opening the gas passage while a piston member is retracted when the fusible alloy mounted on the rear surface of the piston member is melted by the ambient temperature.

Another objective of the present invention is to provide a pressure relief device for a high-pressure vessel capable of preventing gas leakage through a gas passage by improving the sealing performance of the gas passage because a sealing rod of the piston member is inserted into the gas passage to seal the gas passage.

### TECHNICAL SOLUTION

According to an aspect of the present invention, there is provided a pressure relief device for a high-pressure vessel including: a first body part which is coupled to a valve body mounted on a high-pressure vessel, and which has a gas passage and a space part formed therein, the gas passage having a gas of the high-pressure vessel entering therein, and the space part communicating with the gas passage; a second body part which is mounted in the space part of the first body part, and has a gas outlet and a chamber formed therein, the gas outlet discharging, to the outside, the gas that has entered into the space part, and the chamber communicating with the space part; a piston member which is mounted in the chamber so as to be linearly moveable so as to open/close the gas passage; a spring arranged between the space part and the piston member so as to provide an elastic force in the backward-moving direction of the piston member; and a fusible alloy which is mounted in the chamber in a position at the rear of the piston member, and melts when the surrounding temperature reaches a predetermined temperature or higher, wherein, when the fusible alloy melts and is thus discharged to the outside of the chamber, the piston member moves backwards, thereby opening the gas passage.

The first body part may include a cylindrical sealing part which is formed to communicate between the gas passage and the space part and have an inner diameter larger than the gas passage, so that the piston member is inserted and closely adhered.

The piston member may include a slide part inserted slidably into an inner surface of the chamber, a spring support part extending from the slide part, having an outer diameter smaller than the slide part, and supporting a spring, and a sealing rod part extending from the spring support part, having an outer diameter smaller than the spring support part, and inserted into the sealing part to perform a sealing function.

The outer diameter of the sealing rod part may be smaller than an inner diameter of the sealing part to form a gap between the sealing rod part and the sealing part, and a first seal ring and a second seal ring may be mounted on an outer surface of the sealing rod part to seal the gap.

When 1/3 of an area of the fusible alloy remains in the chamber, the first seal ring and the second seal ring may be separated from the sealing part so that gas is discharged through the gap between the sealing rod part and the sealing part.

One side of a gas outlet of the second body part may communicate with the space part, the other side thereof may be formed on the rear surface of the second body part, and a plurality of gas outlets may be formed at regular intervals in a circumferential direction of the second body part.

The chamber may have a melt outlet formed to discharge the melted fusible alloy to the outside of the chamber when the fusible alloy melts, and a filter member for supporting the fusible alloy to maintain an original state when the fusible alloy is in a solid state and allowing the fusible alloy to pass through when the fusible alloy is in a liquid state to be discharged to the melt outlet may be mounted at the rear of the chamber.

### ADVANTAGEOUS EFFECTS

As described above, in the pressure relief device for a high-pressure vessel according to the present invention, the gas passage is sealed by the piston member, and when the fusible alloy melts by the ambient temperature, the piston member opens the gas passage while being retracted by the elastic force of the spring and the pressure of the gas, thereby enabling rapid release of the gas and improving reliability of gas discharging.

In addition, since the sealing rod of the piston member is inserted into the gas passage to seal the gas passage, sealing performance may be improved, and gas leakage through the gas passage may be more reliably prevented.

### BRIEF DESCRIPTION OF THE DRAWINGS

FIG. 1 is a cross-sectional view of a pressure relief device according to an embodiment of the present invention.
FIGS. 2 and 3 are cross-sectional views illustrating operational states of a pressure relief device according to an embodiment of the present invention.

### BEST MODE

Hereinafter, embodiments of the present invention will be described in detail with reference to the accompanying drawings. The sizes and shapes of the components shown in the drawings may be exaggerated for clarity and convenience. In addition, terms defined in consideration of the configuration and operation of the present invention may vary depending on the intention or custom of the user, the operator, and the like.

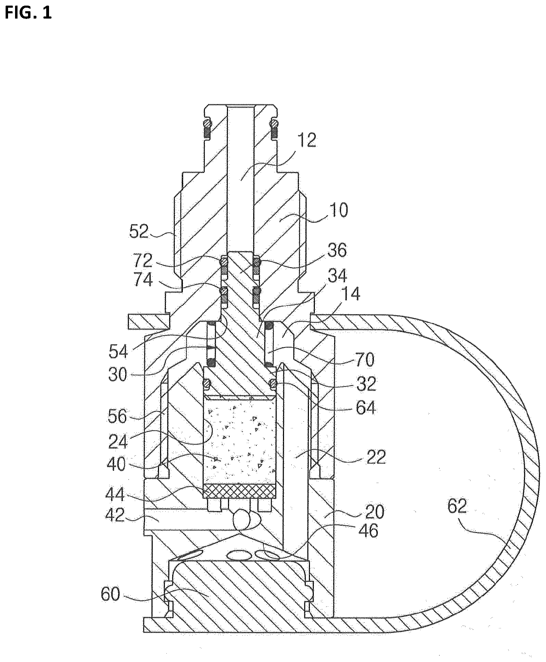

FIG. 1 is a cross-sectional view of a pressure relief device according to an embodiment of the present invention.

A valve assembly for a high-pressure vessel includes: a valve body mounted at an inlet of the high-pressure vessel filled with gas and having a plurality of valves; a manual valve installed in the valve body to manually open and close a flow passage; a solenoid valve installed in the valve body to automatically open and close the flow passage according to an electrical signal; and a pressure relief device installed in the valve body to prevent the high-pressure vessel from exploding by discharging, to the outside, gas in the high-pressure vessel when the ambient temperature rises in the event of an outbreak of fire due to a vehicle accident or the like.

Such a valve assembly for a high-pressure vessel according to the present embodiment is installed in a hydrogen fuel cell vehicle and is mainly used for controlling the flow of a hydrogen raw material and can be applied to any system for charging and supplying a high-pressure gas in addition to the hydrogen fuel cell vehicle.

The pressure relief device includes: a first body part 10 which is mounted on a valve body, has a gas passage 12 communicating with a high-pressure vessel to introduce gas, and has a space part 14 communicating with the gas passage 12; a second body part 20 which is mounted at a rear side of the first body part 10 to seal the space part 14, has a gas outlet 22 for discharging, to the outside, the gas introduced into the space part, and has a chamber 24 formed to communicate with the space part 14; a piston member 30 mounted in the chamber 24 to be linearly movable and opening and closing the gas passage 12, and a fusible alloy 40 which is mounted on the chamber 24 at the rear side of the piston member 30 and melts to secure a space for retracting the piston member 30 when the ambient temperature is greater than or equal to a set temperature.

A male screw 52 is formed on the outer surface of the first body part 10 that is screw-coupled to the valve body. The gas passage 12 is formed to pass through the first body part 10 so that the gas of the high-pressure vessel flows in. A sealing part 54 having an inner diameter greater than that of the gas passage 12 is formed in the first body part 10. A sealing rod part 36 of the piston member 30 is inserted into and closely adhered to the sealing part 54. In addition, the sealing part 54 communicates with the space part 14.

The second body part 20 is inserted into the space part 14 of the first body part 10. In addition, screw coupling parts 56 are formed on the inner surface of the first body part 10 and the outer surface of the second body part 20, respectively, and the piston member 30 is slidably arranged on the inner surface of the chamber 24 communicating with the space part 14. In addition, a plurality of gas outlets 22 each are formed to have one side communicating with the space part 14 and the other side formed on the back of the second body 20, and the plurality of gas outlets 22 are formed at regular intervals in the circumferential direction of the second body 20 to discharge the gas introduced into the space part 14 to the outside through the rear of the second body 20.

A concave part 46 with a center inserted inward is formed on the rear side of the second body 20, and the plurality of gas outlets are exposed to the outside at regular intervals in the circumferential direction of the concave part 46.

When the fusible alloy 40 placed in the chamber 24 is melted, a melt outlet 42 is formed at the rear of the chamber 24 to discharge the melted fusible alloy 40 to the outside of the chamber 24. A filter member 44 is mounted at the rear of the chamber 24. The filter member 44 supports the fusible alloy to maintain an original state when the fusible alloy 40 is in a solid state and allows the fusible alloy to pass through the filter member 44 when the fusible alloy 40 is in a liquid state to be discharged to the melt outlet 42.

The filter member 44 is in the form of a metal mesh and is placed on the back of the chamber 24 to support the fusible alloy 40 so that the fusible alloy 40 does not deform, and when the fusible alloy 40 melts and becomes a liquid state, the liquid fusible alloy 40 passes through the filter member 44.

A stopper member 60 is mounted at the rear of the second body 20 to prevent foreign substances from entering through the gas outlets 22 by blocking the gas outlets 22. The stopper member 60 is connected by a connection band 62 fixed to the first body part 10 to prevent the stopper member 60 from being lost when the stopper member 60 is separated from the gas outlets 22. The stopper member 60 may be separated from the second body part 20 by the pressure of the gas discharged through the gas outlets 22.

The piston member 30 includes: a slide part 32 inserted slidably into the chamber 24; a spring support part 34 that extends from the slide part 32 and has a smaller outer diameter than the slide part 32, and on which a spring 70 is wound and supported; and the sealing rod part 36 that extends from the spring support part 34 and has a smaller outer diameter than the spring support part 34, to be inserted into the sealing part 54 to perform a sealing function.

A backflow prevention O-ring 64 is mounted on the outer surface of the slide part 32 to prevent the gas flowing into the space part 14 from flowing back to the rear of the piston member 30. One end of the spring 70 is supported by the spring support part 34 of the piston member 30, and the other end is supported by the inner surface of the space part 14 to give elasticity in the direction of retreat of the piston member 30.

The outer diameter of the sealing rod part 36 is less than the inner diameter of the sealing part 54, so there is a gap between the sealing rod part 36 and the sealing part 54, and a first sealing ring 72 and a second sealing ring 74 are mounted on the outer surface of the sealing rod part 36 to seal this gap. In this way, the sealing rod part 36 is in the shape of a cylindrical rod, and the sealing part 54 is formed in a cylindrical vessel shape, and when the sealing rod part 36 is inserted into the sealing part 54, the gas passage 12 is sealed, and the first sealing ring 72 and the second sealing ring 74 are mounted on the outer surface of the sealing rod part 36 to fundamentally prevent gas leakage.

In other words, in the case of existing valves, the end of the sealing rod part is in close contact with the end of the sealing part by the elastic force of the spring or the pressure of the gas, and in this case, the spring may be deformed or the sealing rod part may be separated from the sealing part by external impact. Therefore, the valve structure according to the present embodiment has an advantage of maintaining sealing performance regardless of the external impact or the elastic force of the spring since the sealing rod part is arranged in a state of being inserted into the sealing part.

The fusible alloy 40 is mounted to the chamber 24 positioned at the rear of the piston member 30, the front surface of which is in contact with the rear surface of the piston member 30 and the rear surface of which contacts the filter member 44 to support the piston member 30 so that the piston member 30 is not retracted and thus the sealing rod part 36 remains inserted into the sealing part 54. When the ambient temperature rises and The fusible alloy 40 is melted to be discharged to the outside, a space remains at the rear of the chamber 24, and accordingly, the piston member 30 is retracted to open the gas passage 12.

The operation of the pressure relief device for a high-pressure vessel which is constructed as described above according to an embodiment of the present invention will be described below.

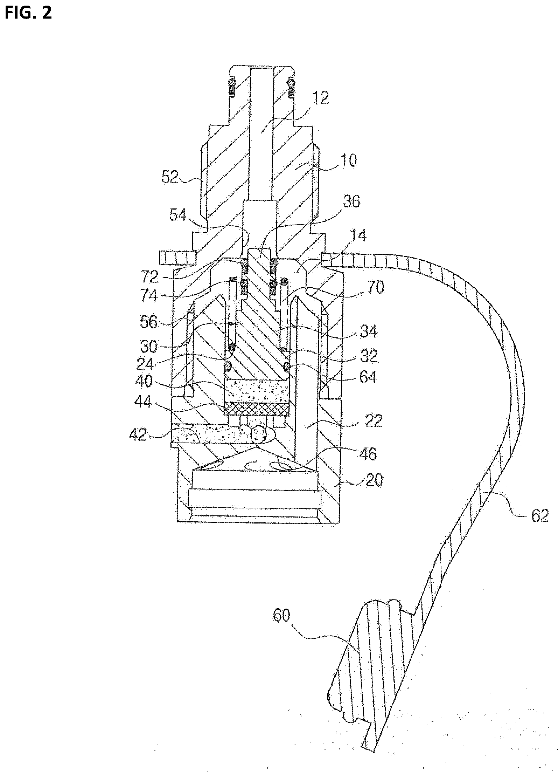

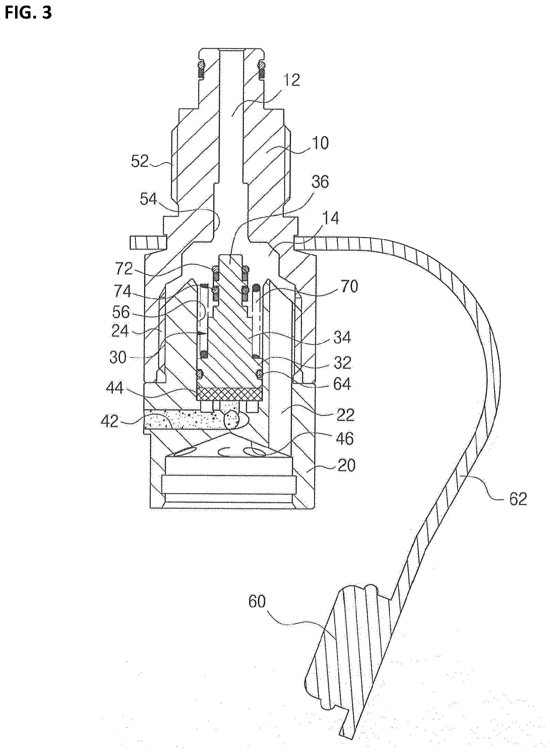

FIGS. 2 and 3 are cross-sectional views illustrating operational states of a pressure relief device for a high-pressure vessel according to an embodiment of the present invention.

When operating normally, the sealing rod part 36 of the piston member 30 is inserted into the sealing part 54 to seal the gas passage 12 to block the discharge of the gas. In this case, the sealing part 54 has a cylindrical vessel shape, and the sealing rod part 36 is formed in a cylindrical rod shape, and the sealing rod part 36 having the cylindrical rod shape is inserted into the sealing part 54 having the cylindrical vessel shape to perform a sealing operation, thereby fundamentally preventing the sealing rod part 36 from being separated from the sealing part 54 due to impact or other external factors, thus blocking the discharge of gas through the gas passage 12.

In addition, when the ambient temperature rises due to a fire or an accident, the fusible alloy 40 is melted and is discharged through the melt outlet 42, and accordingly, a space is formed inside the chamber 24 by the amount of the fusible alloy 40 discharged, and thus the piston member 30 is retracted by the elastic force of the spring 70 and the pressure of the gas.

In this case, as shown in FIG. 2, the first sealing ring 72 and the second sealing ring 74 of the sealing rod part 36 are separated from the sealing part 54 even in a state in which the fusible alloy 40 remains in the chamber 24, and accordingly, gas flows into the space part 14 through the gap between the sealing rod part 36 and the sealing part 54, and the gas introduced into the space part 14 is discharged to the outside through the gas outlets 22. Preferably, gas is discharged through the gap when 1/3 of the total area of the fusible alloy 40 remains in the chamber 24.

In other words, it takes a certain amount of time until the available alloy 40 is completely melted, and there is a problem that gas discharge is delayed during the time when the fusible alloy 40 is completely melted, and gas discharge is not possible quickly. However, in this embodiment, gas may be discharged quickly because the gas passage 12 is opened to discharge the gas from the time the fusible alloy 40 is melted to a certain extent.

In addition, as shown in FIG. 3, when all the fusible alloys 40 are melted over time, the piston member 30 is completely withdrawn, and accordingly, when the sealing rod part 36 is completely separated from the sealing part 54 and the gas passage 12 is opened, gas flows into the space part 14 and is quickly discharged to the outside through the gas outlets 22.

While the present invention has been particularly shown and described with reference to exemplary embodiments thereof, by way of illustration and example only, it is clearly understood that the present invention is not to be construed as limiting the present invention, and various changes and modifications may be made by those skilled in the art within the protective scope of the invention without departing off the spirit of the present invention.

### INDUSTRIAL APPLICABILITY

The present invention is applicable to high-pressure gas vessels such as hydrogen fuel cell systems.

## Claims

1. A pressure relief device for a high-pressure vessel, the pressure relief device comprising:
a first body part which is coupled to a valve body mounted on a high-pressure vessel, and which has a gas passage and a space part formed therein, the gas passage having a gas of the high-pressure vessel entering therein, and the space part communicating with the gas passage;
a second body part which is mounted in the space part of the first body part, and has a gas outlet and a chamber formed therein, the gas outlet discharging, to the outside, the gas that has entered into the space part, and the chamber communicating with the space part;
a piston member which is mounted in the chamber so as to be linearly moveable so as to open/close the gas passage;
a spring arranged between the space part and the piston member so as to provide an elastic force in the backward-moving direction of the piston member; and
a fusible alloy which is mounted in the chamber in a position at the rear of the piston member, and melts when the surrounding temperature reaches a predetermined temperature or higher,
wherein, when the fusible alloy melts and is thus discharged to the outside of the chamber, the piston member moves backwards to thereby open the gas passage.

2. The pressure relief device for a high-pressure vessel of claim 1, wherein the first body part comprises a cylindrical sealing part which is formed to communicate between the gas passage and the space part and have an inner diameter larger than the gas passage, so that the piston member is inserted and closely adhered.

3. The pressure relief device for a high-pressure vessel of claim 2, wherein the piston member comprises: a slide part inserted slidably into an inner surface of the chamber; a spring support part extending from the slide part, having an outer diameter smaller than the slide part, and supporting a spring; and a sealing rod part extending from the spring support part, having an outer diameter smaller than the spring support part, and inserted into the sealing part to perform a sealing function.

4. The pressure relief device for a high-pressure vessel of claim 3, wherein the outer diameter of the sealing rod part is smaller than an inner diameter of the sealing part to form a gap between the sealing rod part and the sealing part, and a first seal ring and a second seal ring is mounted on an outer surface of the sealing rod part to seal the gap.

5. The pressure relief device for a high-pressure vessel of claim 3, wherein, when 1/3 of an area of the fusible alloy remains in the chamber, the first seal ring and the second seal ring are separated from the sealing part so that gas is discharged through the gap between the sealing rod part and the sealing part.

6. The pressure relief device for a high-pressure vessel of claim 1, wherein one side of a gas outlet of the second body part communicates with the space part, the other side thereof is formed on the rear surface of the second body part, and a plurality of gas outlets is formed at regular intervals in a circumferential direction of the second body part.

7. The pressure relief device for a high-pressure vessel of claim 1, wherein the chamber has a melt outlet formed to discharge the melted fusible alloy to the outside of the chamber when the fusible alloy melts, and a filter member for supporting the fusible alloy to maintain an original state when the fusible alloy is in a solid state and allowing the fusible alloy to pass through when the fusible alloy is in a liquid state to be discharged to the melt outlet is mounted at the rear of the chamber.
